# EUROPÄISCHE PATENTANMELDUNG

(11) **EP 1 371 476 A1**
(43) Veröffentlichungstag der Anmeldung: **17.12.2003**
(21) Anmeldenummer: 03002249.5
(22) Anmeldetag: 01.02.2003
(51) Int. Cl.: B29C 69/00, B29C 51/08, B29C 51/20, B29C 51/26

(54) **Vorrichtung zum Herstellen von Innenverkleidungsteilen für Kraftfahrzeuge**

(30) Priorität: 15.02.2002 CZ 20020580; 27.08.2002 CZ 20022899
(71) Anmelder: R+S Technik GmbH, 63073 Offenbach am Main (DE)
(72) Erfinder: Spengler, Ernst Maximilian, 63150 Heusenstamm-Rembrücken (DE)
(74) Vertreter: Schieferdecker, Lutz, Dipl.-Ing.

(57) **Zusammenfassung**

Die Erfindung betrifft eine Vorrichtung mit mindestens zwei Formwerkzeugen (1,2) zum Herstellen von aus mindestens zwei Lagen (102,103) bestehenden Formteilen (101), insbesondere zum Herstellen von Innenverkleidungsteilen für Kraftfahrzeuge, wobei die Formwerkzeuge jeweils Formhälften, ein Maschinengestell, Antriebe, Lager- und Führungselemente sowie eine Steuerung und dergleichen zum Öffnen und Schließen der Formwerkzeuge aufweisen. Der Werkstoff der herzustellenden Formteile weist zumindest Kunststoffbestandteile auf, so daß die Teile unter dem Einfluß von Temperatur und Druck dreidimensional verformbar und die Lagen sodann thermoplastisch miteinander verbindbar sind.

Der Kern der Erfindung besteht darin, daß die Formwerkzeuge mit ihren Formhälften (3,4,5,6) fluchtend untereinander angeordnet sind und daß die Formhälften relativ zueinander in vertikaler Richtung zum Öffnen und Schließen der Formwerkzeuge bewegbar sind und daß mindestens eine obere Formhälfte des oberen Formwerkzeuges mit einer unteren Formhälfte des oberen Formwerkzeuges und einer eine untere Formhälfte bildenden Formhälfte des unteren Formwerkzeuges zusammen wirken und relativ zueinander bewegbar sind.

## Beschreibung

Die Erfindung betrifft eine Vorrichtung mit mindestens zwei Formwerkzeugen zum Herstellen von aus mindestens zwei Lagen bestehenden Formteilen, bei denen es sich insbesondere um Innenverkleidungsteile für Kraftfahrzeuge handelt. Vorrichtungen für derartige Anwendungsfälle sind zum Beispiel aus der US 6,136,415 bekannt und weisen Formwerkzeuge mit jeweils einer oberen Formhälfte und einer unteren Formhälfte für die jeweils herzustellenden Lagen auf. Auch weitere Maschinenkomponenten wie z. B. ein Maschinengestell, Antriebe, Lager- und Führungsteile sowie die notwendige Steuerung zum Öffnen und Schließen der Formwerkzeuge sind grundsätzlich vorgesehen. Als Werkstoff für die einzelnen, zunächst herzustellenden Lagen dienen Materialien, die unter dem Einfluß von Temperatur und Druck dreidimensional verformbar und sodann thermoplastisch miteinander verbindbar sind. Ein derartiger Werkstoff ist zum Beispiel in der EP 0 671 259 beschrieben. Es ist daher bekannt, Innenverkleidungsteile herzustellen, die eine Trageschicht aus Polyolefinfasern und Naturfasern einerseits und eine Dekor- bzw. Deckschicht umfassen, die in einem Arbeitszyklus geformt, laminiert und verbunden werden, wobei dies ohne Zusatz von chemischen Bindemitteln geschieht.

Obwohl die bekannten Herstellungsverfahren und die dazu dienenden Vorrichtungen im wesentlichen zufriedenstellend arbeiten, ist es wünschenswert, die Produktionsgeschwindigkeit und die Produktionssicherheit zu erhöhen, damit mehr Teile pro Zeiteinheit hergestellt werden können und der Arbeitsablauf möglichst einfach ist.

Zur Lösung dieser Aufgabe sieht die Erfindung vor, daß alle Formwerkzeuge mit ihren Formhälften fluchtend untereinander angeordnet sind, daß die Formhälften relativ zueinander in vertikaler Richtung zum Öffnen und Schließen der Formwerkzeuge bewegbar sind, daß ferner die untere Formhälfte des oberen Formwerkzeuges und die obere Formhälfte des unteren Formwerkzeuges quer zu der Bewegungsrichtung beim Öffnen und Schließen der Formwerkzeuge bewegbar sind und daß auch unmittelbar die obere Formhälfte des oberen Formwerkzeuges und die untere Formhälfte des unteren Formwerkzeuges zum Öffnen und Schließen in vertikaler Richtung relativ zueinander bewegbar sind.

Mit Hilfe der besagten Merkmale lassen sich sehr kurze Arbeitszyklen erreichen. Dazu werden die beiden Lagen eines zweilagigen Teiles zunächst einzeln mit Hilfe der beiden Formhälften zweier Formwerkzeuge hergestellt und sodann werden die Formwerkzeuge geöffnet, wobei die eine Lage in der oberen Formhälfte des oberen Formwerkzeuges und die andere Lage in der unteren Formhälfte des unteren Formwerkzeuges verbleiben. Die beiden Formhälften mit den beiden vorgefertigten Lagen werden sodann unmittelbar zusammengeführt, wobei dies ohne jeglichen Zeitverlust geschehen kann, da die beiden zu verschiedenen Formwerkzeugen gehörende Formhälften lediglich in vertikaler Richtung aufeinander zu bewegt werden müssen. Die kurzen Arbeitswege und die damit verbundenen Arbeitszeiten vereinfachen die Herstellungsweise und führen daher auch zu weniger Problemen in der Praxis.

Darüber hinaus gestatten die kurzen Arbeitstakte eine Verfahrensführung, gemäß der die in dem einen Werkstück beziehungsweise in einer Lage gespeicherte Wärmeenergie dazu genutzt werden kann, den thermoplastischen Anschmelzungsprozeß mit der anderen Lage ohne zusätzlich Wärmezufuhr zu gestalten.

In Weiterbildung der Erfindung ist vorgesehen, daß die eine oder andere beziehungsweise beide oberen Formhälften zusätzlich Einrichtungen zum konturgenauen Bearbeiten der Ränder der Lagen bei ihrer Herstellung aufweisen. Dies sind vorzugsweise Stanzelemente.

In diesem Zusammenhang ist es ferner zweckmäßig, wenn eine als Dekorschicht dienende Lage randseitig derart bearbeitet wird, daß sie die Ränder einer als Trageschicht dienenden Lage etwas umgreifen kann, wie dies beispielsweise beim randseitigen Umbuggen eines großflächigeren Teiles um die Ränder eines kleinflächigeren Teiles erfolgt.

Weitere Merkmale gehen aus Unteransprüchen und der Beschreibung im Zusammenhang mit der Zeichnung hervor.

Die Erfindung wird nachstehend anhand von Ausführungsbeispielen, die in der Zeichnung dargestellt sind, näher beschrieben. Dabei zeigen:
- Fig. 1:: zum Teil im Schnitt eine schematische Darstellung von wesentlichen Teilen der Vorrichtung mit den Formhälften vor dem Schließen der beiden Formwerkzeuge;
- Fig. 2:: schematisch einen Grundriß von wesentlichen Teilen der in Fig. 1 dargestellten Vorrichtung;
- Fig. 3:: zum Teil im Schnitt eine schematische Darstellung der oberen Formhälfte des oberen Formwerkzeuges und der unteren Formhälfte des unteren Formwerkzeuges in ihrer Schließstellung sowie in größerem Maßstab;
- Fig. 4:: eine Prinzipskizze mit zum Abdichten der Formwerkzeuge dienenden Elementen;
- Fig. 5:: im Schnitt eine schematische Darstellung einer zum Abdichten dienenden Klemmleiste, insbesondere für luftdurchlässige Werkstoffe in der Schließstellung;
- Fig. 6:: eine abgebrochene Seitenansicht eines messerförmigen Dichtelementes für die Klemmleiste gemäß Fig. 5;
- Fig. 7:: eine schematische Ansicht der Klemmleiste und ihres Dichtelementes im getrennten Zustand;
- Fig. 8:: einen Schnitt durch ein zweilagiges, dreidimensional geformtes Formteil wie zum Beispiel ein Innenverkleidungsteil für ein Kraftfahrzeug;
- Fig. 9:: schematisch eine Ansicht wie in Fig. 1 von einem abgewandelten Ausführungsbeispiel;
- Fig. 10:: schematisch eine Ansicht wie in Fig. 3 von dem Ausführungsbeispiel gemäß Fig. 9 und
- Fig. 11:: schematisch eine Ansicht wie in Fig. 9 von einer dritten Auführungsform.

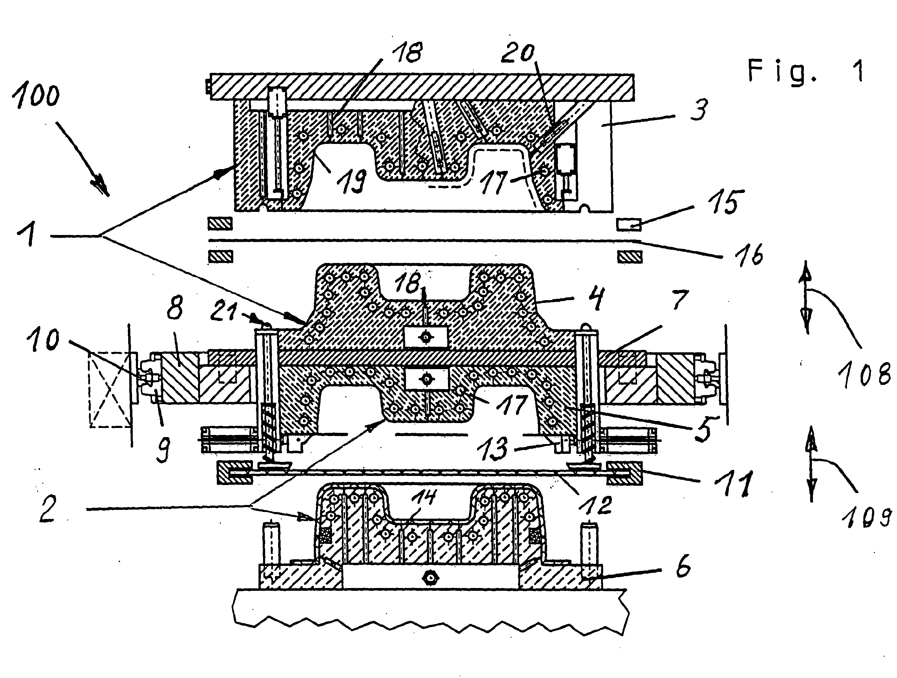

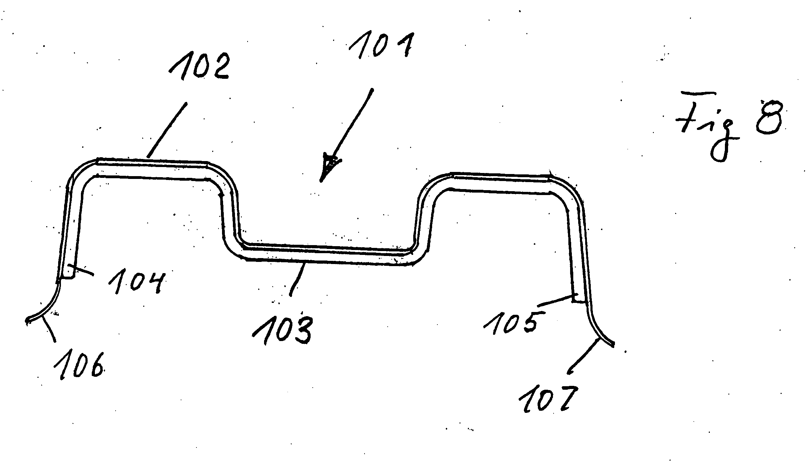

Eine Vorrichtung 100 zum Herstellen eines mindestens zweilagigen Formteiles 101 (Fig. 8) umfaßt gemäß dem in den Fig. 1 - 3 schematisch und bezüglich seiner hier interessierenden Komponenten dargestellten Ausführungsbeispiel zwei Formwerkzeuge 1 und 2. Beide Formwerkzeuge 1 und 2 bestehen ihrerseits wiederum aus zwei Formhälften, wobei das Formwerkzeug 1 eine obere Formhälfte 3 und eine untere Formhälfte 4 und das untere Formwerkzeug 2 eine obere Formhälfte 5 und eine untere Formhälfte 6 aufweisen.

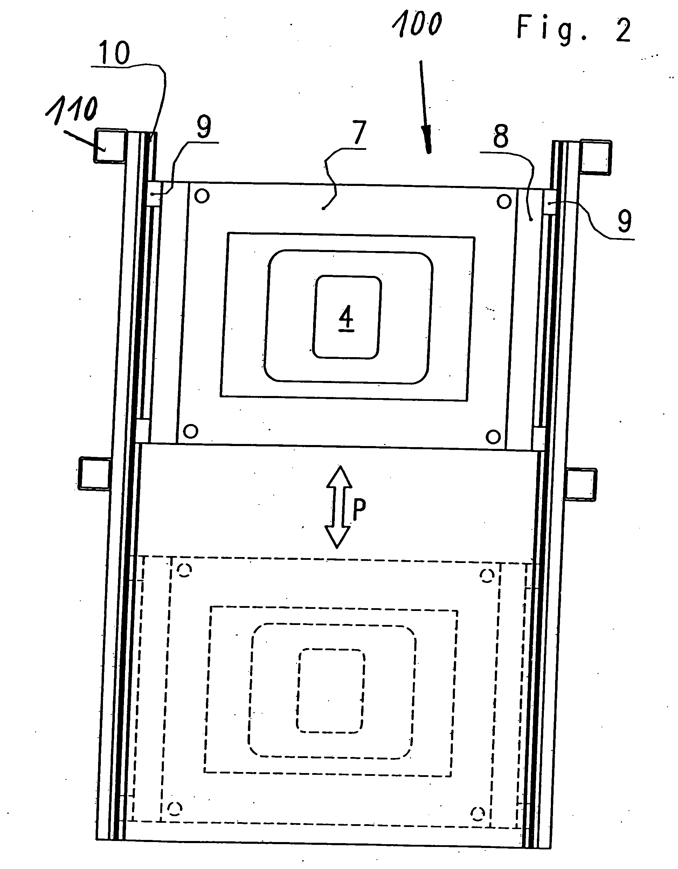

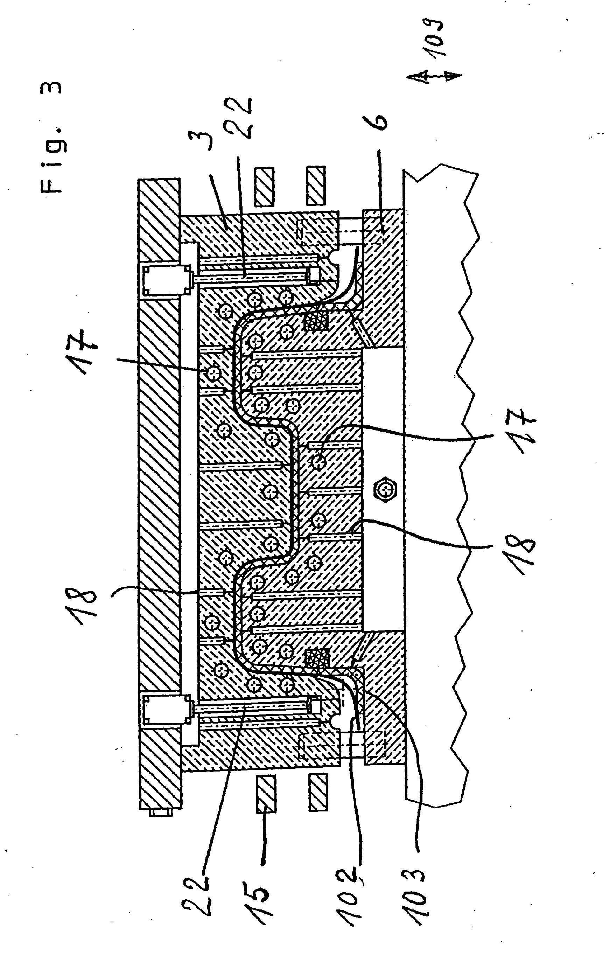

Beide Formwerkzeuge 1 und 2 sind mit ihren Formhälften 3, 4 sowie 5 und 6 in einem in Fig. 2 angedeuteten Maschinengestell 110 fluchtend untereinander angeordnet. Ferner sind in den Fig. nicht dargestellte Antriebe sowie Lager- und Führungselemente für die Formhälften der Formwerkzeuge 1 und 2 und darüber hinaus eine Steuerung für die Antriebe und so weiter vorgesehen, damit die Formwerkzeuge 1 und 2 beziehungsweise ihre Formhälften 3 - 6 aufeinander zu und voneinander weg bewegbar sind beziehungsweise funktionsgerecht öffnen und schließen (siehe Doppelpfeile 108 und 109 in den Fig. 1 und 3).

Die untere Formhälfte 4 des oberen Formwerkzeuges 1 und die obere Formhälfte 5 des unteren Formwerkzeuges 2 sind gemäß Ausführungsbeispiel starr miteinander verbunden und gemeinsam bewegbar. Dazu sind die beiden Formhälften 4 und 5 an einem plattenförmigen Trageelement 7 angeordnet. Ein Rahmen 8 ist vorgesehen und nimmt das Trageelement 7 mit den beiden Formteilen 4 und 5 zum Quertransport auf und gibt es für vertikale Bewegungen der beiden Formhälften 4 und 5 frei. Das Trageelement 7 weist Rollen 9 oder Gleitsteine auf, mit deren Hilfe die beiden Formteile 4 und 5 längs Schienen 10 aus der in Fig. 1 dargestellten Arbeitsposition mit den beiden anderen Formhälften 3 und 6 in eine Position gemäß Fig. 2 derart bewegbar sind, daß die obere Formhälfte 3 des oberen Formwerkzeuges 1 und die untere Formhälfte 6 des unteren Formwerkzeuges 2 zusammenwirken können (Fig. 3). Die Länge der Schienen 10 und der Fahrweg für die beiden starr miteinander verbundenen Formhälften 4 und 5 ist so gewählt, daß die beiden Formhälften 4 und 5 mindestens vollständig den Arbeitsbereich der beiden relativ zueinander in vertikaler Richtung bewegbaren Formhälften 3 und 6 verlassen können. Die Vorrichtung 100 weist daher für die beiden Formhälften 4 und 5 eine Arbeitsposition entsprechend den durchgezogenen Linien und eine Parkposition entsprechend den gestrichelten Linien in Fig. 2 auf, wobei ferner die Bewegungsrichtungen der beiden Formhälften mit Hilfe des Doppelpfeiles P in Fig. 2 angegeben sind.

Das mit Hilfe der Vorrichtung 100 herzustellende Formteil 101 besteht aus mindestens zwei Lagen 102 und 103 (Fig. 8), die in der Vorrichtung 100 mit Hilfe der beiden Formwerkzeuge 1 und 2 zunächst getrennt hergestellt werden.

Hierzu dient jeweils ein flächiges Ausgangsmaterial 12 beziehungsweise 16, das unter dem Einfluß von Wärme und Druck dreidimensional verformbar ist. Bei der Herstellung eines Innenverkleidungsteiles für ein Kraftfahrzeug dient das flächige Ausgangsmaterial 12 zur Bildung einer Trageschicht beziehungsweise gemäß Fig. 8 zur Bildung der Lage 103 des Formteiles 101. Das andere, ebenfalls flächige Ausgangsmaterial 16 dient zur Herstellung einer Deck- beziehungsweise Dekorschicht und gemäß Fig. 8 zur Herstellung der Lage 102. Mit der Trageschicht beziehungsweise Lage 103 wird die notwendige Festigkeit und Steifigkeit des als Endprodukt dreidimensional geformten sowie formbeständigen Formteiles 101 erzielt.

Wie aus Fig. 1 hervorgeht, wird das zur Herstellung der Trageschicht beziehungsweise der Lage 103 dienende Ausgangsmaterial 12 mit Hilfe einer Spann- und Trageeinrichtung 11 zwischen den Formhälften 5 und 6 des geöffneten, unteren Formwerkzeuges 2 angeordnet. In gleicher Weise wird das als Dekor- beziehungsweise als Deckschicht dienende, flächige Ausgangsmaterial 16 mit Hilfe einer Spann- und Trageeinrichtung 15 zwischen den Formhälften 3 und 4 des oberen Formwerkzeuges 1 angeordnet (Fig. 1).

Zur Vervollständigung der Formhälften 3 - 6 sind ferner Elemente 13 beziehungsweise 22 zum konturgenauen Herstellen der Ränder der in den Formwerkzeugen 1 und 2 zunächst getrennt hergestellten Teile vorgesehen. Ferner weisen die Formhälften 3 - 6 Kanäle 17 zum gezielten Erwärmen und Abkühlen vor, nach oder während des Formvorganges auf. Weitere Bohrungen 18 sind in der oberen Formhälfte 3 des oberen Formwerkzeuges 1 vorgesehen und enden an der Innenkontur 19 der Formhälfte 3. Die Bohrungen 18 sind entweder mit einem nicht dargestellten Unterdruck- beziehungsweise Vakuumerzeuger verbunden oder sie dienen zur Aufnahme von Haltenadeln 20 für das in dem Formwerkzeug 1 herzustellende Teil.

Zweckmäßigerweise ist die Formhälfte 3 in der Vorrichtung 100 starr angeordnet, während die drei anderen Formhälften 4, 5 und 6 in Richtung der Formhälfte 3, das heißt in vertikaler Richtung nach oben zum Schließen der beiden Formwerkzeuge 1 und 2 bewegbar sind. Dabei werden die zwischen den Formhälften 3 - 6 befindlichen Lagen in der gewünschten Weise verformt. Die Schließposition der beiden Formwerkzeuge 1 und 2 ist in den Fig. nicht dargestellt. Es genügt, wenn nur das untere Formwerkzeug 6 einen Hubantrieb aufweist (in Fig. 1, 3 nicht dargestellt).

Nachdem die Lagen 102 und 103 in den beiden Formwerkzeugen konturparallel hergestellt sind, werden die Formwerkzeuge 1 und 2 geöffnet und die starr miteinander verbundenen Formhälften 4 und 5 bewegen sich aus der Arbeitsposition in die Parkposition gemäß Fig. 2. Die obere, eine Dekor- beziehungsweise Deckschicht bildende Lage 102 bleibt beim Öffnen der Formwerkzeuge in der oberen Formhälfte 3 des oberen Formwerkzeuges 1. Erreicht wird dies entweder mit Hilfe von punktförmig angreifendem Unterdruck an der Innenkontur 19 der oberen Formhälfte 3 oder mit Hilfe von dort wirksamen Haltenadeln 20. Das die untere Lage 103 beziehungsweise die Tragschicht bildende, ursprünglich flächige Ausgangsmaterial 12 ist nunmehr dreidimensional geformt gemäß dem in Fig. 1 dargestellten Teil 14. Dieses geformte und ausreichend erwärmte Teil 14 bleibt auf der unteren Formhälfte 6 des unteren Formwerkzeuges 2. Die Formhälfte 6 wird zum Herstellen des vollständigen Formteiles 101 in vertikaler Richtung nach oben mit der oberen Formhälfte 3 des oberen Formwerkzeuges 1 zusammengeführt beziehungsweise gegen diese gedrückt (Fig. 3). Nachdem die beiden in den Formhälften 3 und 6 befindlichen Teile sich thermoplastisch miteinander verbunden haben und ausreichend abgekühlt sind, wird die aus den beiden Formhälften 3 und 6 bestehende Form geöffnet. Daraufhin kann das fertiggestellte Formteil 101 entnommen werden.

Zweckmäßigerweise wird das als Trageschicht dienende Teil 14 (Fig. 1) bereits in dem ersten Arbeitsschritt derart erwärmt, daß die in ihm gespeicherte Wärmemenge ausreicht, um eine thermoplastische Verbindung mit dem die Dekor- beziehungsweise Deckschicht bildenden, in der Oberform 3 des oberen Formwerkzeuges 1 befindlichen Lage 102 zur Herstellung eines einstückigen, mehrlagigen Formteiles 101 zu erzeugen.

Die das mehrlagige Formteil 101 bildenden Lagen 102 und 103 weisen gemäß Fig. 8 unterschiedliche Ränder 104 und 105 beziehungsweise 106 und 107 auf. Die Gestaltung der Ränder 106 und 107 der Lage 102 ist derart gewählt, daß sie in einem weiteren Arbeitsschritt um die freien Enden der Ränder 104 und 105 der Lage 103 gelegt werden können. Dies geschieht durch Umbuggen der freien Ränder 106 und 107 um die Ränder 104 und 105. Die notwendige Form und Gestalt erhalten die beiden Lagen 102 und 103 bereits in der Vorrichtung 100 mit Hilfe der zum Bearbeiten dieser Ränder dienenden Elemente 13 beziehungsweise 22 jeweils in den oberen Formhälften 3 und 5 der Formwerkzeuge 1 und 2. Die Elemente 13 und 22 sind zum Beispiel die Stanzmesser einer Stanzvorrichtung oder sonstige, in geeigneter Weise wirkende Trennelemente.

Beide Formwerkzeuge 1 und 2 weisen ferner Elemente zum Abdichten der miteinander zusammenwirkenden Formhälften 3 und 4 beziehungsweise 5 und 6 beziehungsweise 3 und 6 auf. Besonders wichtig sind diese zum Abdichten dienenden Elemente dann, wenn das Ausgangsmaterial 12 beziehungsweise 16 luftdurchlässig ist.

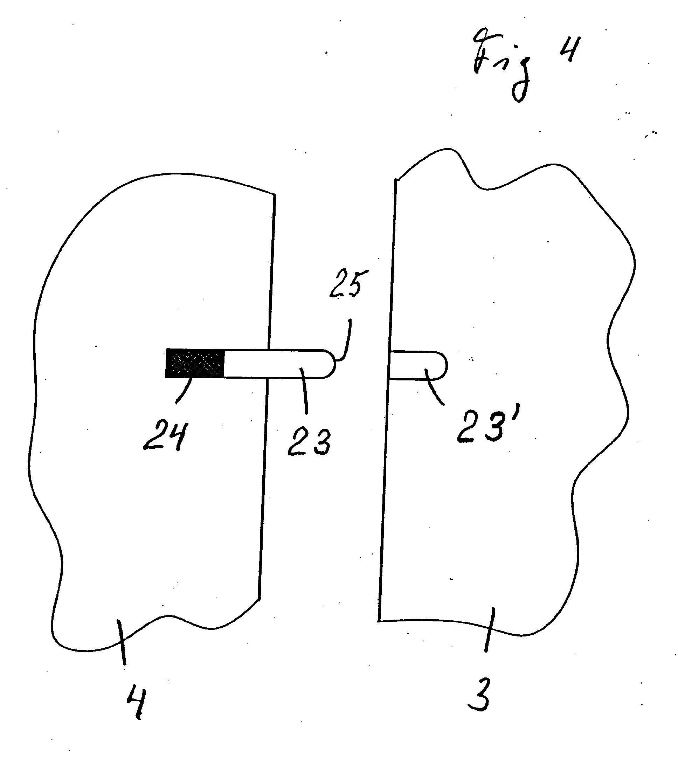

Gemäß der Darstellung in Fig. 4 weist die eine Formhälfte wie zum Beispiel die Formhälfte 3 als Dichtelement einen Dichtungsspalt 23' auf, während über die Oberfläche der anderen Formhälfte 4 als Dichtelement eine Dichtungsleiste 23 vorsteht. Die Dichtungsleiste 23 kann in der Formhälfte 4 zum Beispiel federelastisch abgestützt sein. Dazu dient zweckmäßigerweise ein federndes Element wie zum Beispiel ein Gummikörper 24 oder dergleichen.

Um eine gute Abdichtung zu erzielen ist es ferner zweckmäßig, wenn der Dichtungsspalt 23' in der Schließstellung das freie Ende beziehungsweise den freien Rand 25 der Dichtungsleiste 23 formschlüssig aufnimmt.

Eine weitere Dichtungseinrichtung 26 für Formwerkzeuge der hier interessierenden Art umfaßt gemäß den Fig. 5 bis 7 ebenfalls eine Dichtungsleiste 30, die in der einen oder anderen Formhälfte im Bereich von deren einander zugewandten Flächen 28, 29 angeordnet ist. Gemäß Ausführungsbeispiel ist sie in der Formhälfte 31 nicht federnd, sondern starr angeordnet.

Zu der Dichtungsleiste 30 in der einen Formhälfte 31 gehört eine Klemmleiste 32 in der anderen Formhälfte 33.

Verwendung findet die Dichtungseinrichtung 26 vor allem dann, wenn das zu verarbeitende Ausgangsmaterial 12 beziehungsweise 16 luftdurchlässig ist.

Beim Schließen der Dichtungseinrichtung 26 dringt die Dichtungsleiste 30 mit ihrem freien Rand beziehungsweise Ende 34 in die im Querschnitt zum Beispiel ringförmige Klemmleiste 32 ein (Fig. 5).

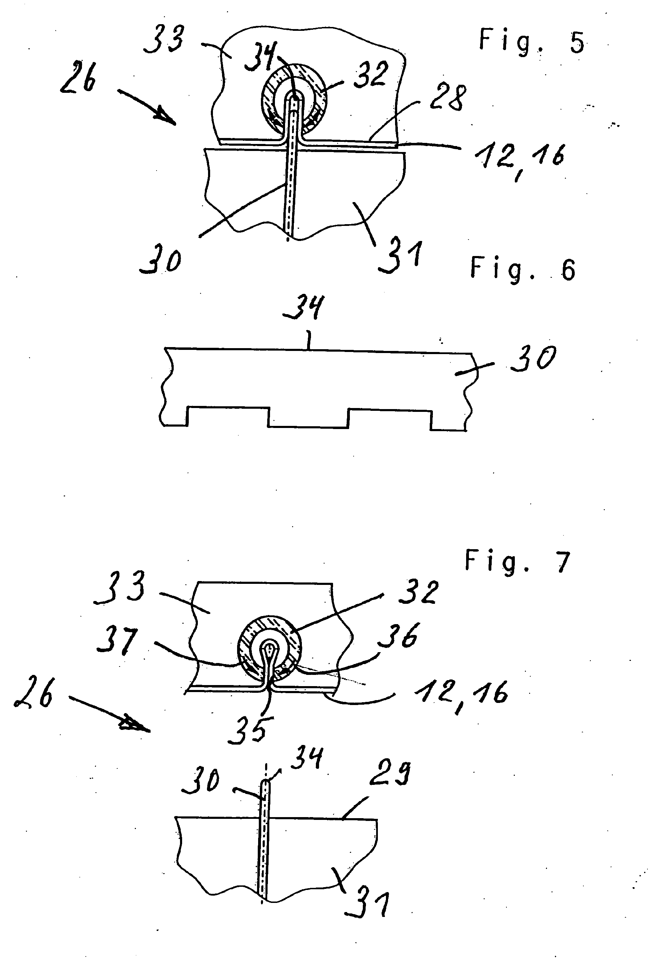

Die Klemmleiste 32 ist über ihre Länge geschlitzt und besteht aus einem federelastischen Werkstoff. Beim Eindringen in die Klemmleiste 32 verschiebt die Dichtungsleiste 30 mit ihrem freien Ende 34 zugleich das Ausgangsmaterial 12, 16 in die rohr- oder schlauchförmige Klemmleiste 32 durch einen Ein- und Austrittsschlitz 35. Aufgrund von federelastischen Eigenschaften der Klemmleiste 32 drücken deren den Ein- und Austrittsschlitz begrenzenden Ränder in Richtung aufeinander zu gemäß den Pfeilen 36 und 37 (Fig. 7) und stellen dadurch eine vollständige Abdichtung sicher, auch wenn das Ausgangsmaterial 12, 16 luftdurchlässig ist. Dies gilt insbesondere auch dann, wenn gemäß Fig. 5 sich nicht nur Ausgangsmaterial 12, 13 faltenförmig im Inneren der Klemmleiste 32 befindet, sondern zusätzlich auch noch der freie Rand 34 der Dichtungsleiste 30.

Die Dichtungsleiste 30 ist zweckmäßigerweise messerförmig und kann aus einem metallischen Werkstoff bestehen.

Beim Bestücken mit dem Ausgangsmaterial 12 und 16 befinden sich die Formhälften 3, 4, 5 beziehungsweise 6 in vier verschiedenen, vertikal übereinander angeordneten Ebenen. Das Ausgangsmaterial 12 beziehungsweise 16 kann bereits außerhalb der Vorrichtung 100 in der erforderlichen Weise erwärmt beziehungsweise erhitzt werden, so daß das Material zusammen mit den in den Formhälften befindlichen Bohrungen, Leitungen beziehungsweise Kanälen 17 die jeweils die erforderliche Arbeitstemperatur zwischen 160° C und 220° C erreicht. Dazu kann - wie dies grundsätzlich bekannt ist, heißes Wasser oder heißes Öl durch die Leitungen strömen.

Als Werkstoff für eine Trageschicht dient bahn- beziehungsweise mattenförmiges Material aus Polypropylenfasern und Naturfasern oder aus Polypropylenfasern und Glasfasern beziehungsweise aus Polypropylenfasern und Zellulosefasern. Die Dekor- beziehungsweise Deckschichten bestehen ebenfalls aus thermoplastischen Werkstoffen in Form von Folien, gewebten oder nicht gewebten Textilien und können auch synthetische Schaumstoffe enthalten.

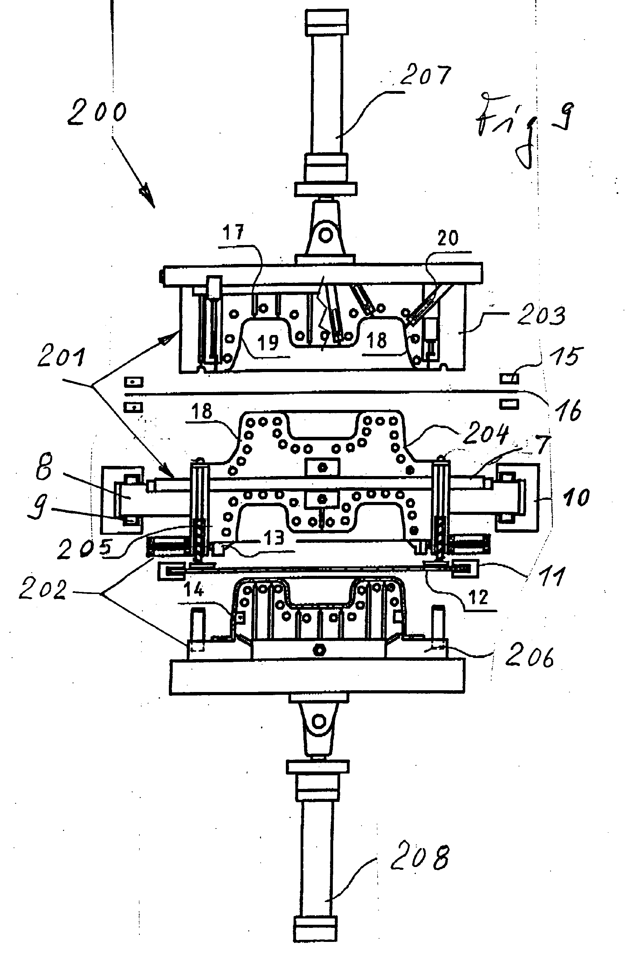

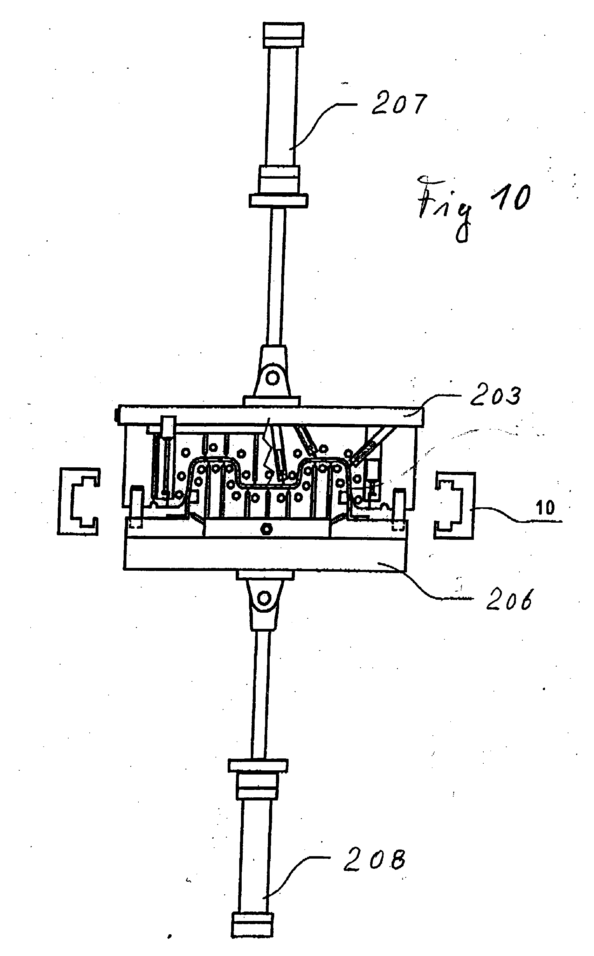

Die in den Fig. 9 und 10 nur teilweise sowie schematisch dargestellte Vorrichtung 200 weist grundsätzlich dieselben Maschinenteile und Komponenten und so weiter auf wie die Vorrichtung 100 gemäß den Fig. 1 bis 3. Die Vorrichtung 200 umfaßt daher ebenfalls zur Herstellung eines zweilagigen Teiles 101 (Fig. 8) zwei Formwerkzeuge 201 und 202 mit jeweils zwei Formhälften 203, 204 beziehungsweise 205 und 206. Auch alle anderen, im Zusammenhang mit der Vorrichtung 100 beschriebenen Komponenten sind vorhanden und in den Fig. 9 und 10 mit gleichen Bezugszahlen beziffert.

Ein Unterschied zwischen der Vorrichtung 100 und der Vorrichtung 200 besteht darin, daß die obere Formhälfte 203 des oberen Formwerkzeuges 201 einen eigenen Hubantrieb 207 und die untere Formhälfte 206 des unteren Formwerkzeuges 202 einen eigenen Hubantrieb 208 aufweisen. Die Formhälfte 203 ist daher mit Hilfe ihres Hubantriebes 207 mit dem notwendigen Druck gegen die zugehörige untere Formhälfte 204 bewegbar und die untere Formhälfte 206 des unteren Formwerkzeuges 202 ist mit dem notwendigen Druck mit Hilfe der Hubeinrichtung 208 gegen die obere Formhälfte 205 des unteren Formwerkzeuges 206 bewegbar, wenn zunächst die beiden Lagen 102 und 103 des Formteiles 101 (Fig. 8) hergestellt werden. Zum thermoplastischen Aneinanderschweißen der beiden getrennt hergestellten Lagen 102 und 103 werden dann wiederum die vorzugsweise starr miteinander verbundenen Formhälften 204 und 205 seitlich aus dem Arbeitsraum zwischen den beiden Formhälften 203 und 206 entfernt, damit diese beiden Formhälften 203 und 206 mit Hilfe ihrer Hubantriebe 207 und 208 unmittelbar zusammenwirken können (Fig. 10).

Wie bei dem ersten Ausführungsbeispiel kann die obere Formhälfte 203 des oberen Formwerkzeuges 201 in einem ersten Arbeitsschritt mit der unteren Formhälfte 204 und in einem zweiten Arbeitsschritt mit der unteren Formhälfte 206 des unteren Formwerkzeuges 202 zusammenwirken, wobei die untere Formhälfte 206 in einem ersten Arbeitsschritt mit der oberen Formhälfte 204 des unteren Formwerkzeuges 202 zusammengewirkt hatte.

Jeweils eigene Hubantriebe 207 und 208 für die beiden Formhälften 203 und 206 bringen gegenüber dem zuerst beschriebenen Ausführungsbeispiel einige Vorteile mit sich. So ist es zum Beispiel nicht notwendig, daß die beiden Formhälften 204 und 205 aus dem Rahmen 8 mit den Rollen beziehungsweise Gleitsteinen 9 herausgehoben werden müssen. Der technische Aufwand ist daher trotz einer zweiten Hubeinrichtung im Ergebnis geringer als im Falle einer einzigen Hubeinrichtung (Fig. 1).

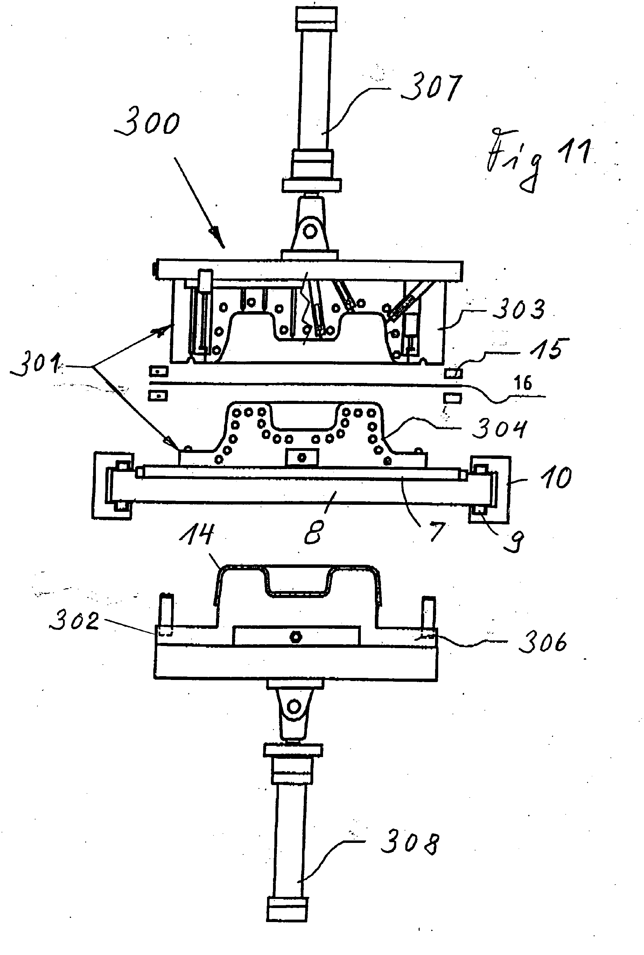

Eine Vorrichtung 300 gemäß dem dritten, in Fig. 11 schematisch dargestellten Ausführungsbeispiel umfaßt auch ein komplettes oberes Formwerkzeug 301 und ein nicht komplettes unteres Formwerkzeug 302. Zu dem kompletten oberen Formwerkzeug 301 gehören eine obere Formhälfte 303 und eine untere Formhälfte 304 wie bei den beiden zuerst beschriebenen Ausführungsbeispielen.

Das untere Formwerkzeug 302 kann eine obere Formhälfte aufweisen, dies ist aber nicht zwingend notwendig (Fig. 11). Gemäß Ausführungsbeispiel ist das untere Formwerkzeug 302 nur mit einer unteren Formhälfte 306 wie im Falle der beiden anderen Ausführungsbeispiele ausgestattet.

Auch ist ein an der oberen Formhälfte 303 des oberen Formwerkzeuges 301 angreifender Hubantrieb 307 und ein an der Formhälfte 306 des unteren Formwerkzeuges 302 angreifender Hubantrieb 308 vorgesehen.

Die beiden Formhälften 303 und 304 des oberen Formwerkzeuges 301 dienen wiederum zur Herstellung einer flächigen, dreidimensional geformten Lage 102 für das zweilagige Formteil 101 (Fig. 8), wobei das in der Spann- und Trageeinrichtung 15 gehaltene Ausgangsmaterial 16 dient. Das für die zweite Lage 103 des zweilagigen Formteiles 101 benötigte, zweite vorgefertigte Teil 14 wird in einer anderen, in den Fig. nicht dargestellten Vorrichtung hergestellt und im Bereich seiner Ränder bearbeitet beziehungsweise beschnitten. Sodann wird dieses vorgefertigte Teil 14 auf die untere Formhälfte 306 des unteren Formwerkzeuges 302 aufgelegt, nachdem zuvor die untere Formhälfte 304 des oberen Formwerkzeuges 301 aus dem Arbeitsraum zwischen den beiden Formhälften 303 und 306 entfernt worden sein kann. Sodann wirken wiederum die beiden zu den Antrieben 307 und 308 gehörenden Formhälften 303 und 306 zusammen, um das zweilagige Formteil 101 vollständig zu fertigen, wie dies auch bereits im Zusammenhang mit den anderen Ausführungsbeispielen beschrieben wurde.

Das vorgefertigte Teil 14 kann auf die untere Formhälfte 306 mit einem Handlingsgerät oder auch von Hand aufgelegt werden, wenn dies im Einzelfall sinnvoll ist. Dies gilt insbesondere dann, wenn das vorgefertigte Teil 14 wegen unterschiedlicher Stückzahlen oder wegen besonderer Werkstoffeigenschaften zweckmäßigerweise auf einer anderen Vorrichtung vorgefertigt wird.

Verschiedene, in den anderen Fig. dargestellte Maschinenkomponenten und Ausgestaltungen fehlen in Fig. 11 nur wegen der besseren Übersichtlichkeit und sind im erforderlichen Umfang auch vorhanden.

Die Erfindung ist schließlich nicht auf die in den Fig. dargestellten Ausführungsbeispiele beschränkt, vielmehr sind noch Änderungen und Abwandlungen möglich, ohne von dem grundsätzlichen Erfindungsgedanken abzuweichen.

## Patentansprüche

1. Vorrichtung mit mindestens zwei Formwerkzeugen (1, 2) zum Herstellen von aus mindestens zwei Lagen (102, 103) bestehenden Formteilen (101), insbesondere zum Herstellen von Innen-Verkleidungsteilen für Kraftfahrzeuge, wobei die Formwerkzeuge (1, 2) jeweils eine obere Formhälfte (3, 5) und eine untere Formhälfte (4, 6) für jeweils eine Lage (102, 103) aufweisen und wobei weitere Komponenten wie ein Maschinengestell, Antriebe, Lager- und Führungselemente sowie eine Steuerung und dergleichen zum Öffnen und Schließen der Formwerkzeuge (1, 2) vorgesehen sind, und wobei die Lagen (102, 103) Werkstoffe aufweisen, die unter dem Einfluß von Temperatur und Druck dreidimensional verformbar und sodann thermoplastisch miteinander verbindbar sind,
**dadurch gekennzeichnet,**
**daß** die Formwerkzeuge (1, 2) mit ihren Formhälften (3, 4, 5, 6) fluchtend untereinander angeordnet sind,
**daß** die Formhälften (3, 4, 5, 6) relativ zueinander in vertikaler Richtung zum Öffnen und Schließen der Formwerkzeuge (1, 2) bewegbar sind,
**daß** ferner die untere Formhälfte (4) des oberen Formwerkzeuges (1) und die obere Formhälfte (5) des unteren Formwerkzeuges (2) quer zu der Bewegungsrichtung beim Öffnen und Schließen der Formwerkzeuge (1, 2) bewegbar sind und
**daß** unmittelbar die obere Formhälfte (3) des oberen Formwerkzeuges (1) und die untere Formhälfte (6) des unteren Formwerkzeuges (2) zum Öffnen und Schließen in vertikaler Richtung relativ zueinander bewegbar sind.

2. Vorrichtung nach Anspruch 1, **dadurch gekennzeichnet, daß** das untere Formwerkzeug (2) zum Herstellen einer als Trageschicht dienenden Lage (103) und daß das obere Formwerkzeug (1) zum Herstellen einer als Deckschicht/Dekorschicht dienenden Lage (102) vorgesehen sind.

3. Vorrichtung nach Anspruch 1, **dadurch gekennzeichnet, daß** die untere Formhälfte (3) des oberen Formwerkzeuges (1) und die obere Formhälfte (5) des unteren Formwerkzeuges (2) starr miteinander verbunden und gemeinsam bewegbar sind.

4. Vorrichtung nach Anspruch 1, **dadurch gekennzeichnet, daß** die untere Formhälfte (3) des oberen Formwerkzeuges (1) und die obere Formhälfte (5) des unteren Formwerkzeuges (2) an einem plattenförmigen Trageelement (7) angeordnet sind.

5. Vorrichtung nach Anspruch 1, **dadurch gekennzeichnet, daß** zusätzlich Elemente (13) zum konturgenauen Bearbeiten der Ränder (104, 105) beim Herstellen der Lage (103) an der oberen Formhälfte (5) des unteren Formwerkzeuges (2) angeordnet ist.

6. Vorrichtung nach Anspruch 1, **dadurch gekennzeichnet, daß** zusätzlich Elemente (22) zum konturgenauen Bearbeiten der Ränder (106, 107) bei der Herstellung der Lage (102) an der oberen Formhälfte (3) des oberen Formwerkzeuges (1) angeordnet sind.

7. Vorrichtung nach Anspruch 1, **dadurch gekennzeichnet, daß** die obere Formhälfte (3) des oberen Formwerkzeuges (1) in dem Maschinengestell unbeweglich angeordnet ist und daß die anderen Formhälften (4, 5, 6) bewegbar angeordnet sind.

8. Vorrichtung nach Anspruch 5, **dadurch gekennzeichnet, daß** die Elemente (13) zum konturgenauen Bearbeiten der Ränder (104, 105) der einen Lage (103) Stanzelemente umfassen.

9. Vorrichtung nach Anspruch 6, **dadurch gekennzeichnet, daß** die Elemente (22) zum konturgenauen Bearbeiten der Ränder (106, 107) der anderen Lage (102) Stanzelemente umfassen.

10. Vorrichtung nach Anspruch 1, **dadurch gekennzeichnet, daß** Bohrungen/ oder Kanäle (17, 18) in den Formhälften (3, 4, 5, 6) zum Erzeugen eines Vakuums, zur Führung von Haltenadeln (20) und/oder zur Erzeugung von Druckluft und/oder zum Erwärmen oder Kühlen bei der Herstellung der Lage (102, 103) und zur Herstellung des vollständigen Formteiles (101) vorgesehen sind.

11. Vorrichtung nach Anspruch 3, **dadurch gekennzeichnet, daß** ein Rahmen (8) mit Rollen (9) zum Querverfahren vorgesehen ist und als Träger zur lösbaren Aufnahme der Formhälften (4, 5) dient.

12. Vorrichtung nach Anspruch 1, **dadurch gekennzeichnet, daß** die Formhälften Dichtelemente aufweisen und daß die eine Formhälfte (3) eine Dichtleiste (23) und die andere Formhälfte (4) einen Dichtungsspalt (23') für die Dichtleiste (23) aufweist.

13. Vorrichtung nach Anspruch 1, **dadurch gekennzeichnet, daß** eine Dichtungseinrichtung (26) mit einer Dichtungsleiste (30) an der einen Formhälfte und eine einen Ein- und Austrittsschlitz (35) aufweisende Klemmleiste (32) an der anderen Formhälfte derart vorgesehen sind, daß das zu bearbeitende Ausgangsmaterial (12, 16) mit Hilfe der Dichtungsleiste (30) in die Klemmleiste (32) verschiebbar ist.

14. Vorrichtung nach Anspruch 1, **dadurch gekennzeichnet, daß** je ein Hubantrieb (207, 208) an der oberen Formhälfte (203) des oberen Formwerkzeuges (201) und an der unteren Formhälfte (206) des unteren Formwerkzeuges (202) angreift.

15. Vorrichtung mit mindestens zwei Formwerkzeugen (301 und 302) zum Herstellen von aus mindestens zwei Lagen (102, 103) bestehenden Formteilen (101), insbesondere zum Herstellen von Inneverkleidungsteilen für Kraftfahrzeuge, wobei die Formwerkzeuge (301 und 302) eine obere Formhälfte (303) und zwei untere Formhälften (304 und 306) aufweisen und wobei weitere Komponenten wie ein Maschinengestell, Hubantriebe (307 und 308), Lager- und Führungselemente sowie Steuerung und dergleichen zum Öffnen und Schließen der Formwerkzeuge (301 und 302) vorgesehen sind, und wobei die Lagen (102, 103) Werkstoffe aufweisen, die unter dem Einfluß von Temperatur und Druck dreidimensional verformbar und sodann thermoplastisch miteinander verbindbar sind,
wobei die obere Formhälfte (303) in einem ersten Arbeitsschritt mit einer unteren Formhälfte (304) des oberen Formwerkzeuges (301) zusammenwirkt und
wobei die obere Formhälfte (303) in einem zweiten Arbeitsschritt mit der Formhälfte (306) des unteren Formwerkzeuges (302) zusammenwirkt.

16. Vorrichtung nach Anspruch 15, **dadurch gekennzeichnet, daß** je ein Hubantrieb (307, 308) an der oberen Formhälfte (303) des oberen Formwerkzeuges (301) und an der Formhälfte (306) des unteren Formwerkzeuges (302) angreifen.

17. Vorrichtung nach Anspruch 15, **dadurch gekennzeichnet, daß** die obere Formhälfte (303) mit dem Hubantrieb (307) und eine erste, untere und zusätzlich quer zur Hubeinrichtung bewegbare Formhälfte (304) ohne Hubantrieb einerseits und die obere Formhälfte (303) mit einer zweiten, unteren Formhälfte (306) mit einem eigenen Hubantrieb (308) andererseits zusammenwirkt.
